# EUROPÄISCHE PATENTSCHRIFT

(11) **EP 0 338 221 B1**
(45) Veröffentlichungstag und Bekanntmachung des Hinweises auf die Patenterteilung: **07.12.1994**
(21) Anmeldenummer: 89103720.2
(22) Anmeldetag: 03.03.1989
(51) Int. Cl.: C08J 7/00, C09D 4/02, C09D 7/12

(54) **Folienbahn**
Foil web
Bande de feuille

(30) Priorität: 12.04.1988 DE 3812121
(43) Veröffentlichungstag der Anmeldung: 25.10.1989
(73) Patentinhaber: ALKOR GMBH KUNSTSTOFFE, D-81451 München (DE)
(72) Erfinder: Schneider, Manfred, Dipl.-Ing., D-8911 Hagenheim (DE)

(56) Entgegenhaltungen:
- EP-A- 0 000 407
- EP-A- 0 102 830
- EP-A- 0 193 845
- US-A- 4 005 244
- US-A- 4 684 675

## Beschreibung

Die vorliegende Erfindung betrifft eine aus mindestens zwei Schichten bestehende Folienbahn, zusammengesetzt aus mindestens einer ein- oder mehrschichtigen Kunststoffolienbahn oder Papierbahn, mit einer Gesamtdicke von 50 bis 500 µm, vorzugsweise 100 bis 400 µm, sowie einer unmittelbar darauf oder über eine darauf befestigte Zwischenschicht oder Kunststoffzwischenschicht angeordneten 3 bis 30 µm dicken, vorzugsweise 5 bis 10 µm dicken, unter Mitverwendung mindestens eines monomeren, di- und/oder trimeren Acrylates hergestellten Acrylat-Lackschicht sowie ein Verfahren zur Herstellung der lackbeschichteten Folienbahn bestimmter Zusammensetzung mit verbesserten Eigenschaften.

Aus der US-A-4 684 675 sind bereits sprühbare Mattlacke, matte Farben und transparente matte Filme bekannt, die aus einem filmbildenden Kunstharz aus Polystyrol, Polyester oder Polyvinylchlorid, einheitlich großen, glatten, zusammendrückbaren nichtelastomeren Polyethylenteilchen, relativ harten Mattierungsmitteln mit einem durchschnittlichen Teilchendurchmesser, der annähernd dem der Polyethylenteilchen entspricht, einem organischen Lösungsmittel oder Lösemittel und einem Weichmacher bestehen. Diese Anstrichmittel weisen jedoch den Nachteil auf, daß sie eine begrenzte bzw. schlechte Lagerstabilität besitzen und eine Redispergierung schwierig ist. Der Mattgrad ändert sich und die Haftfestigkeit ist verbesserungsbedürftig.

Daher wurde, ausgehend von diesem Stand der Technik, in der EP-A-O102830 vorgeschlagen, ein mattes, mit energiereichen Strahlen härtbares Beschichtungsmittel einzusetzen, das zusätzlich keine Mattierungsmittelteilchen, insbesondere keine anorganischen Mattierungsmittel enthält.

Dieses Beschichtungsmittel enhält, bezogen auf 100 Gewichtsteile des Monomeren, mindestens 30 Gew.-% einer Verbindung, die wenigstens 3 Acryloyloxy- und/oder Methacryloyloxy-Gruppen im Molekül und bis zu 70 % bis 2 a, β-ethylenisch ungesättigte Verbindungen aufweist, und 0,01 bis 6,0 Gew.-% Lichtstabilisierungsmittel sowie 0,5 bis 30 Gewichtsteile eines vernetzten Polymeren oder Copolymeren aus reaktiven Monomeren, die eine a, β-ethylenisch ungesättigte Verbindung im Molekül aufweisen und aus einem reaktiven Monomeren, das mindestens 2 a, β-ethylenisch ungesättigte Bindungen im Molekül besitzt. Das Mittel dieser Zusammensetzung muß in 100 bis 2000 Gewichtsteilen mindestens eines organischen Lösemittels, bezogen auf 100 Gewichtsteile des Kunststoffbeschichtungsmittels, aufgelöst werden. Das vernetzte Polymere oder Copolymere muß dabei einen sehr hohen Vernetzungsgrad aufweisen (vgl. u.a. Seite 11, Zeile 25). Durch die hohe Vernetzung des Polymeren mit hohem Molekulargewicht wird erreicht, daß besonders große Kunststoffteilchen erhalten werden. Wahrscheinlich geben diese großen Polymerisatteilchen in Kombination mit den organischen Lösemitteln den gewünschten Mattierungseffekt, ohne daß Mattierungsmittel zugefügt werden müssen.

Zusätzlich besteht jedoch bei diesem Beschichtungsmittel der Vorteil, daß bestimmte Oberflächen, z.B. Kunststoff oder bestimmte Papierqualitäten, durch das organische Lösemittel oder Lösemittelgemisch angequollen oder angelöst werden, so daß die Haftung der Beschichtung verbessert wird. Während bei Anstrichen oder Beschichtungen im Freien die organischen Lösemittel leicht verdunsten können, ergeben sich bei Beschichtungen mit dem Beschichtungsmittel gemäß der Literaturstelle EP-A-0102830 in Fabriken, Werkshallen und dergleichen erhebliche Schwierigkeiten.

Aus der DE-OS 3110754 ist ein Verfahren zur Herstellung eines, mit durch Elektronenstrahlen gehärtetem Lack beschichteten, flächenförmigen Trägermaterials mit matter Oberfläche bekannt, wobei das flächenförmige Trägermaterial mit einem durch Elektronenstrahlen härtbaren Lack (EBC-Lack) beschichtet wird, der aus 4 bis 40 Gew.-%, bezogen auf den fertigen EBC-Lack, eines Gemisches aus 40 bis 90 Gew.-Teilen wasserverdünnbaren, vernetzungsfähigen Monomeren und 60 bis 10 Gew.-Teilen Wasser besteht und die Lackschicht mit Elektronenstrahlen gehärtet wird. Als wasserverdünnbare Monomere werden Hydroxyacrylat, Pentaerythrit, Triacrylat, Diethylen-Glykoldiacrylat usw. eingesetzt. Nachteilig ist bei diesem Verfahren, daß Lösungsmittelbeständigkeit, Chemikalienbeständigkeit und Abriebbeständigkeit unzureichend sind. Die Mattierungsgrade sind häufig nicht ausreichend. Diese Lacke weisen darüberhinaus einen hohen Polymerisationsschrumpf auf, so daß eine Verziehung oder ein Einrollen der Trägerbahn häufig unvermeidbar ist.

Ziel und Aufgabe der vorliegenden Erfindung war es insbesondere die vorgenannten Nachteile zu vermeiden. Es sollten Trägerschichten mit Acrylatlacken mit geringerem Polymerisationsschrumpf erhalten werden, die zusätzlich Eigenschaftsverbesserungen aufweisen sollten. Insbesondere sollten die Lösungsmittelbeständigkeit, Chemikalienbeständigkeit und Abriebbeständigkeit sowie der Mattierungsgrad verbessert werden. Darüber hinaus sollte das Herstellungsverfahren Verbesserungen erbringen.

Erfindungsgemäß wurde festgestellt, daß diesen Zielen und Aufgaben eine aus mindestens zwei Schichten bestehende Folienbahn gerecht wird, die aus mindestens einer ein- oder mehrschichtigen Kunststoffolienbahn oder Papierbahn, mit einer Gesamtdicke von 50 bis 500 µm, vorzugsweise 100 bis 400 µm, sowie einer unmittelbar darauf oder über eine darauf befestigte Zwischenschicht oder Kunststoffzwischenschicht angeordneten 3 bis 30 µm dicken, vorzugsweise 5 bis 10 µm dicken, unter Mitverwendung mindestens eines monomeren, di- und/oder trimeren Acrylates hergestellten Acrylat-Lackschicht zusammengesetzt ist.

Gemäß der Erfindung besteht die strahlenhärtbare Lackschicht aus einem Mattlack auf der Basis eines Acrylatgemisches, das durch Umsetzung mindestens eines prepolymeren Acrylates mittleren Molekulargewichtes von 500 bis 2000 mit dem monomeren, di- und/oder trimeren Acrylat, hergestellt ist, und der Lack je 100 Gew.-Teile des Acrylatlackes (berechnet ohne jedes Zusatzmittel, Verarbeitungshilfsmittel oder Treibmittel) 20 bis 60 Gew.-Teile eines Mattierungsmittelgemisches, 1 bis 10 Gew.-Teile eines UV-Initiators oder UV-Initiatorgemisches, 0 bis 10 Gew.-Teile eines Treibmittels oder Treibmittelgemisches enthält oder daraus besteht, wobei in dem Mattlack keine zusätzlichen Verdünnungs- oder Lösungsmittel enthalten sind, das eingesetzte monomere, di- und/oder trimere Acrylat eine Viskosität von 7 bis 200 mPas und das verwendete prepolymere Acrylat eine Viskosität von 500 bis 15000 mPas aufweisen und das Mattierungsmittelgemisch aus mindestens zwei chemisch verschiedenen Mattierungsmitteln und/oder Mattierungsmitteln mit unterschiedlichen Teilchengrößen besteht.

Nach einer bevorzugten Ausführungsform enthält die strahlenhärtbare Lackschicht je 100 Gew.-Teile des Acrylatlackes (berechnet ohne jedes Zusatzmittel, Verarbeitungshilfsmittel oder Verdünnungsmittel) 30 bis 50 Gew.-Teile eines Mattierungsmittels oder Mattierungsmittelgemisches, 2 bis 8 Gew.-Teile eines UV-Initiators oder UV-Initiatorgemisches, vorzugsweise eines aminfreien UV-Initiators oder UV-Initiatorgemisches, sowie 0,1 bis 8 Gew.-% eines Treibmittels oder Treibmittelgemisches oder besteht daraus. Durch die Mitverwendung des aminfreien UV-Initiators oder -gemisches wird der Mattierungsgrad zusätzlich verbessert.

Neben mindestens einem monomeren, di- und/oder trimeren Acrylat, dem prepolymeren Acrylat und den Treibmitteln sind keine zusätzlichen Verdünnungs- oder Lösungsmittel in der aufgebrachten Acrylatlackschicht enthalten. Als Treibmittel werden die an sich bekannten organisch-chemischen Treibmittel, u.a. Azodicarbonamid, und/oder organische Treibmittel oder Wasser eingesetzt.

Nach einer bevorzugten Ausführungsform ist unter Verwendung von Mattierungsmittel und/oder Treibmittel der Mattgrad auf der Folie zwischen 3 und 15 % (gemessen nach Gardener) bei einem Winkel von 60° eingestellt.

Die strahlenhärtbare Lackschicht ist durch Umsetzung mindestens eines monomeren, dimeren und/oder trimeren Acrylates mit einer Viskosität von 5 bis 500 mPas, vorzugsweise 7 bis 200 mPas, mit mindestens einem prepolymeren Acrylat mit einer Viskosität von 500 bis 15.000 mPas, vorzugsweise 1000 bis 10.000 mPas, gebildet und ist nachfolgend mittels energiereicher Bestrahlung ausgehärtet worden.

Das Mattierungsmittelgemisch gemäß der Lackschicht besteht bevorzugt aus mindestens zwei chemisch verschiedenen Mattierungsmitteln und/oder Mattierungsmitteln mit unterschiedlichen Teilchengrößen und/oder Teilchen mit unterschiedlichen Oberflächenstrukturen. Als Mattierungsmittel sind anorganisch-chemische und/oder organisch-chemische Mattierungsmittel in dem Metallack enthalten, vorzugsweise ein unpolares, anorganisch-chemisches Mattierungsmittel oder unpolares, anorganisch-chemisches Mattierungsmittelgemisch.

Die anorganisch-chemischen Mattierungsmittel weisen in der Lackschicht eine mittlere Korngröße von 0,5 bis 20 µm, vorzugsweise 2 bis 12 µm, auf, während die organisch-chemischen Mattierungsmittel eine mittlere Teilchengröße von 0,04 bis 10 µm, vorzugsweise 0,2 bis 5 µm, besitzen.

Nach einer bevorzugten Ausführungsform enthält das Acrylatgemisch je 100 Gew.-Teile Acrylatlack (berechnet ohne jedes Zusatzmittel oder Verarbeitungshilfsmittel zusätzlich 1 bis 20 Gew.-Teile, vorzugsweise 2 bis 10 Gew.-Teile, mindestens eines Isocyanates und/oder Polyisocyanates oder wird mit diesen Gewichtsmengen an Isocyanat und/oder Polyisocyanat umgesetzt.

Als Preopolymere Acrylate werden Polyesteracrylate, Urethanacrylate, Acrylacrylate und/oder Methacrylacrylate, Oligoesteracrylate, Epoxiacrylate und/oder Mischungen von zwei oder mehreren dieser prepolymeren Acrylate bevorzugt eingesetzt, wobei das durchschnittliche Molekulargewicht der prepolymeren Acrylate zwischen 500 bis 2000 liegt.

Die Erfindung betrifft weiterhin ein Verfahren zur Herstellung eines mit Elektronenstrahlen härtbarem Lack beschichteten flächenförmigen Trägermaterials mit matter Oberfläche, wobei das Trägermaterials aus mindestens einer ein- oder mehrschichtigen Kunststoffolienbahn oder Papierbahn, mit einer Gesamtdicke von 50 bis 500 µm, vorzugsweise 100 bis 400 µm, besteht und unmittelbar darauf oder über eine darauf befestigte Zwischenschicht oder Kunststoffzwischenschicht eine strahlenhärtbare Lackschicht aufgebracht wird, die mindestens ein monomeres, die- und/oder trimeres Acrylat sowie gegebenenfalls übliche Zusatzstoffe, vorzugsweise Siliziumdioxid, und/oder Füllstoffe enthält.

Gemäß der Erfindung wird die strahlenhärtbare Lackschicht durch Umsetzung mindestens eines prepolymeren Acrylates mittleren Molekulargewichtes von 500 bis 2000 mit dem monomeren, di- und/oder trimeren Acrylat, hergestellt, wobei der Lack je 100 Gew.-Teile des Acrylatlackes (berechnet ohne jedes Zusatzmittel, Verarbeitungshilfsmittel oder Treibmittel) 20 bis 60 Gew.-Teile eines Mattierungsmittelgemisches, 1 bis 10 Gew.-Teile eines UV-Initiators oder UV-Initiatorgemisches, 0 bis 10 Gew.-Teile eines Treibmittels oder Treibmittelgemisches enthält oder daraus besteht, wobei in dem Mattlack keine zusätzlichen Verdünnungs- oder Lösungsmittel verwendet werden, das eingesetzte monomere, di- und/oder trimere Acrylat eine Viskosität von 7 bis 200 mPas und das verwendete prepolymere Acrylat eine Viskosität von 500 bis 15000 mPas aufweisen und als Mattierungsmittelgemisch aus mindestens zwei chemisch verschiedenen Mattierungsmitteln und/oder Mattierungsmitteln mit unterschiedlichen Teilchengrößen eingesetzt werden. Die aufgebrachte Lackschicht wird durch langwellige Strahlen, vorzugsweise Infrarotstrahlen, auf eine Temperatur zwischen 75 und 150 °C erwärmt und unmittelbar anschließend durch Elektronenstrahlen oder UV-Strahlen ausgehärtet.

Dem aufzutragenden Lack werden bevorzugt vor dem Auftragen auf den Träger je 100 Gew.-Teile des Acrylatlackes (berechnet ohne jedes Zusatzmittel, Verarbeitungshilfsmittel) 20 - 60 Gew.-Teile eines Mattierungsmittels oder Mattierungsmittelgemisches, 1 - 10 Gew.-Teile eines UV-Initiators oder UV-Initiatorgemisches sowie 0 - 10 Gew.-Teile eines Treibmittels oder Treibmittelgemisches zugefügt, die Bestandteile werden miteinander vermischt und die aufgebrachte Lackschicht durch langwellige Strahlen, vorzugsweise Infrarotstrahlen, auf eine Temperatur zwischen 75 und 150 °C, vorzugsweise 80 bis 130 °C, erwärmt und unmittelbar anschließend durch Elektronenstrahlen oder UV-Strahlen ausgehärtet.

Nach einer bevorzugten Ausführungsform des erfindungsgemäßen Verfahrens wird ein strahlenhärtbarer Lack aufgebracht, der je 100 Gew.-% des Acrylatlackes (berechnet ohne jedes Zusatzmittel oder Verarbeitungshilfsmittel) 30 - 90 Gew.-Teile eines Mattierungsmittels oder Mattierungsmittelgemisches, 2 - 8 Gew.-Teile eines UV-Initiators oder UV-Initiatorgemisches, vorzugsweise eines aminfreien UV-Initiators oder UV-Initiatorgemisches, sowie 0,1 - 8 Gew.-Teile eines Treibmittels oder Treibmittelgemisches enthält oder daraus besteht, wobei der strahlenhärtbare Lack neben mindestens einem monomeren, di- und/oder trimmeren Acrylat zusätzlich mindestens ein prepolymeres Acrylat enthält, wobei die Viskosität (gemessen in mPa s) des prepolymeren Acrylates oder prepolymeren Acrylatgemisches um mehr als das Doppelte, vorzugsweise um mehr als das Fünffache höher eingestellt wird, als die Viskosität des monomeren, di- und/oder trimeren Acrylates oder Acrylatgemisches.

Das Acrylatharzgemisch wird bevorzugt im Walzendirektauftrag oder mittels Übertragungswalzen oder im Rakelverfahren auf die Trägerbahn aufgetragen, erwärmt bzw. erhitzt und nachfolgend durch Strahlen gehärtet.

Nach dem Auftragen des Acrylatlackes und nach dem Erwärmen oder Erhitzen, vorzugsweise nach dem Aufschäumen des Treibmittels oder Treibmittelgemisches wird die aufgebrachte Lackschicht unter Verwendung von ultraviolettem Licht oder mit Elektronenstrahlen mit einer Strahlenintensität von 1 - 10 Mrad, vorzugsweise 2 - 7 Mrad, ausgehärtet.

Nach einer bevorzugten Ausführungsform des erfindungsgemäßen Verfahrens werden neben mindestens einem monomeren, di- und/oder trimeren Acrylat, mindestens einem prepolymeren Acrylat und/oder einem Treibmittel oder Treibmittelgemisch keine zusätzlichen Verdünnungs- oder Lösungsmittel in das Acrylatlackgemisch eingebracht.

Der Mattierungsgrad oder Mattgrad des Mattlackes wird gemäß der Erfindung unter Verwendung von mindestens einem Mattierungsmittel und/oder Treibmittel zwischen 3 % bis 15 % (gemessen nach Gardener) bei einem Winkel von 60 ° eingestellt.

Nach einer bevorzugten Ausführungsform der Erfindung wird mindestens ein monomeres, di- und/oder trimereres Acrylat mit einer Viskosität von 5 - 500 mPa s, vorzugsweise 7 - 200 mPa s, mit einem prepolymeren Acrylat mit einer Viskosität von 500 - 15000 mPa s, vorzugsweise 1000 - 10000 mPa s, in Gegenwart oder in Abwesenheit der anderen Bestandteile des Acrylatlackes umgesetzt und/oder mit den übrigen Bestandteilen vermischt, erwärmt und nachfolgend durch energiereiche Strahlen gehärtet. Zusätzlich werden 0 - 4 Gew.-Teile, vorzugsweise 0,01 - 2,5 Gew.-Teile, Verarbeitungshilfsmittel, bezogen auf 100 Gew.-Teile Acrylat, eingesetzt.

Nach einer bevorzugten Ausführungsform beträgt das Gewichtsverhältnis des monomeren, di- und/oder trimeren Acrylates oder Acrylatgemisches zu dem prepolymeren Acrylat oder prepolymeren Acrylatgemisch 5 : 1 bis 1 : 1, vorzugsweise 4 : 1 bis 1,3 : 1.

Nach einer weiteren bevorzugten Ausführungsform erhält der Acrylatlack 80 - 50 Gew.-Teile, vorzugsweise 79 - 55 Gew.-Teile, des monomeren, di- und/oder trimeren Acrylates oder Acrylatgemisches und 20 - 50 Gew.-Teile, vorzugsweise 21 - 45 Gew.-Teile, des prepolymeren Acrylates oder prepolymeren Acrylatgemisches sowie zusätzlich die übrigen Bestandteile.

Als Trägerbahn werden als Kunststoffolienbahn an sich bekannte Kunststoffe, wie z.B. solche auf der Basis oder unter Mitverwendung von Polyolefinen, Polyvinylchlorid, Polyvinylidenchlorid, Ethylen-Propylen-Dien-Mischpolymerisaten, Polymerisate, die Styrol, Acrylnitril, Polycarbonate, Fluorpolymerisate und/oder Polyester enthalten oder daraus bestehen, eingesetzt.

Nach einer bevorzugten Ausführungsform wird als Trägerbahn eine Polyolefin-Folie verwendet, die vorzugsweise mit durch Oberflächenaktivierung verbesserbaren Haftungseigenschaften aufweist. Das Polyolefin ist dabei bevorzugt Polyethylen, Polypropylen, ein Mischpolymeres von Polyethylen oder Polypropylen, ein Copolymeres von Polyethylen oder Polypropylen mit einer Wärmebeständigkeit VSP/A über 100 °C oder ein Gemisch davon, das zusätzlich 1 bis 50 Gew.-% feinteilige Cellulose, mit mittleren Teilchendurchmesser von 1 bis 100 µ, wobei die größte mittlere Länge der Cellulose bis 300 µ beträgt und ggf.
a) 1 bis 50 Gew.-% eines mineralischen Füllstoffs und/oder
b) 0,5 bis 20 Gew.-%, jeweils bezogen auf die Summe von Polyolefin und Cellulose, eines Modifizierungsmittels aus der Reihe der Polymeren auf der Basis von Styrol und Elastomeren und der Copolymerisate oder Pfropfcopolymerisate von Ethylen mit reaktiven Monomeren sowie
c) Pigmente oder Farbstoffe in üblicher Menge enthält.

Nach einer bevorzugten Ausführungsform enthält diese Trägerfolie auf Polyolefinbasis 3 bis 30 Gew.-% Cellulose und/oder Glimmer, Talkum, Kieselsäure, Silikate und/oder TiO₂ oder andere Füllstoffe.

Im Rahmen der Erfindung geeignet sind feinteilige reine oder weniger reine, native oder regenerierte Cellulose. Beispielsweise sind geeignet α-Cellulose, die bevorzugt wird, β-Cellulose, γ-Cellulose. Baumwolle mit einem Cellulosegehalt von mindestens 80 % oder regenerierte Cellulose.

Die Cellulosemenge liegt zwischen 1 und 50 Gew.-%, bezogen auf die Summe von Polyolefin und Cellulose. Wird ein Anteil von 50 % überschritten, so verliert das Produkt zunehmend den Foliencharakter und ein papieränhlicher Charakter tritt in den Vordergrund. Unter 1 % ist die erzielte Verbesserung der Oberflächenaktivierung nicht ausgeprägt genug. Bevorzugt enthält die Folie 3 bis 30 Gew.-% Cellulose.

Der Feinheitsgrad der Cellulose in der erfindungsgemäßen Folie liegt zwischen 1 und 100 µ. Ein feinerer Verteilungsgrad ist zu aufwendig, bei größeren Partikeln treten Probleme bei der Herstellung glatter Folien auf. Bei faserförmiger Cellulose können jedoch auch Teilchen bis zu 5 detex einer größten mittleren Länge von 300 µ verwendet werden, ohne daß hinsichtlich der Folienbildung grundsätzlich Schwierigkeiten auftreten.

Als Polyolefin werden im Rahmen der Erfindung verwendet alle Arten von Polyethylen, einschließlich Polyethylen hoher Dichte (HDPE), Polyethylen niedriger Dichte (LDPE), Polypropylen, Mischpolymere und Ethylen und Propylen sowie die Copolymeren von Ethylen oder Propylen, welche eine Wärmebeständigkeit VSP A über 100 °C aufweisen sowie Gemische dieser Stoffe. Bei den Copolymeren kommen vor allem solche mit Vinylverbindungen in Betracht.

Die erfindungsgemäße Trägerfolie kann zusätzlich auch mineralische Füllstoffe enthalten. Derartige Füllstoffe für Polymerfolien sind bekannt. Besonders geeignet und daher bevorzugt werden Glimmer, Talkum, Silikate und Kieselsäure in ihren verschiedenen Formen. Beispiele für andere brauchbare mineralische Füllstoffe sind Carbonate, insbesondere Calciumcarbonate, wie Kalkstein und Kreide sowie Magnesiumcarbonate und dgl.

Durch den Zusatz geeigneter mineralischer Füllstoffe lassen sich Eigenschaften, wie Vicatpunkt, Shorehärte und Zugfestigkeit beeinflussen. Falls derartige mineralische Füllstoffe vorhanden sind, enthält die Folie 1 bis 50 Gew.-%, vorzugsweise 2 bis 30 Gew.-%, bezogen auf die Summe von Polyolefin und Cellulose.

Außerdem kann die Folie noch ein oder mehrere organische Modifiziermitel enthalten. Diese dienen zur Regelung von Zähigkeit, Kalandrierbarkeit, Extrudierbarkeit und ähnlichen Eigenschaften. Eine bevorzugte Gruppe hierfür sind Blockpolymer von Styrol mit Butadien oder Isobutylen oder Isopren. Andere geeignete Modifizierungsmittel sind Polymerisate auf Basis Styrol-Butadien, Methacrylat-Butadien-Styrol-Polyolefine, die funktionelle Gruppen enthalten, eignen sich besonders zur Beeinflussung des Verhältnisses von physikalischen Eigenschaften zur Verklebbarkeit. Derartige Modifizierungszusätze sind in einer Menge von 0,5 bis 20 Gew.-%, vorzugsweise von 2 bis 10 Gew.-%, bezogen jeweils auf die Summe von Polyolefin und Cellulose, vorhanden.

Wie bereits erwähnt, kommen die Vorteile der erfindungsgemäßen Folie dannn zur Geltung, wenn sie einer die Oberflächenadhäsion verbessernden Behandlung unterworfen wird. Bevorzugt besteht diese Oberflächenbehandlung in einer Aktivierung durch Bestrahlung. Unter den Bestrahlungsmethoden wird wiederum eine Corona-Behandlung bevorzugt.

Nach einer bevorzugten und vorteilhaften Ausführungsform enthält die Trägerfolie oder mindestens eine Oberfläche oder Oberflächenschicht der Trägerfolie reaktive Gruppen. Die reaktiven Gruppen der Trägerfolie bestehen nach der bevorzugten Ausführungsform aus Hydroxy- und/oder Methoxy-Gruppen und/oder N-Methylol-Gruppen ((=N-CH₂-OH)Gruppen)) und/oder (=N-CH₂-OR)-Gruppen. Die auf mindestens einer Oberfläche oder Oberflächenschicht Hydroxy-Gruppen enthaltenden Kunststoffolien bestehen nach einer bevorzugten Ausführungsform aus Cellulose, Cellulosederivaten und/oder Stärke sowie einem Olefinhomo- und/oder -copolymerisat oder Vinylchloridhomo-, -co- oder -pfropfpolymeriat.

Als Stärke sind die an sich bekannten Stärkesorten, z. B. Kartoffelstärke und dgl. geeignet sowie chemisch und/oder physikalisch modifizierte, feinteilige bzw. feinkörnige Stärkearten und Stärkeabbauprodukte. Bevorzugt werden jedoch feinstteilige bzw. feinkörnige Knollenstärken (insbesondere Kartoffelstärke), Getreidestärken (insbesondere Maisstärke) und/oder Wurzelstärken eingesetzt. Die Stärke kann nach einer Ausführungsform teilweise durch Lignin ersetzt werden. Nach einer bevorzugten Ausführungsform gelangen feinstteilige bzw. feinkörnige Gemische von Cellulose und Stärke zur Anwendung. Hydroxy-Gruppen anderer Verbindungen, z. B. von Vinylalkoholen, ergeben nicht so haftfeste Verbindungen innerhalb der erfindungsgemäßen Kombination.

Die auf mindestens einer Oberfläche oder Oberflächenschicht enthaltenden reaktiven Gruppen der Trägerfolie bestehen nach einer anderen Ausführungsform aus Methoxy- und/oder N-Methylolgruppen ((=N-CH₂-OH)-Gruppen)) und/oder (=N-CH₂OR)-Gruppen, die vorzugsweise unter Mitverwendung von Hexamethoxy-Methylmelamin und/oder nichtplastifiziertem Melaminharz oder von Umsetzungsprodukten dieser Verbindungen, vor, bei oder nach der Herstellung der Kunststoffe oder Kunststofffolien auf der Basis von Olefinhomo- und/oder -copolymerisat oder Vinylchloridhomo-, -copolymerisat oder -pfropfpolymerisat zugefügt werden.

Nach einer anderen bevorzugten Ausführungsform besteht die Trägerbahn aus einer reaktive Verbindungen oder reaktive Gruppen enthaltenden Polyolefinfolie oder Polyolefinfolienbahn, wobei in der Polyolefinfolie oder Polyolefinfolienbahn ein feinteiliger Füllstoff oder ein Fülltoffgemisch, sowie ggf. Verarbeitungshilfsmittel, Farbpigmente und/oder Modifizierungsmittel enthalten sind. Gemäß der Erfindung besteht die mindestens zwei-, vorzugsweise mehrschichtige Folie oder Folienbahn aus einer Polyolefinfolie oder Polyolefinfolienbahn, enthaltend ein Gemisch oder eine Legierung aus 70 - 97,5 Gew.-Teilen, vorzugsweise 75 - 85 Gew.-Teilen, eines Propylenhomo- oder -copolymeristes, und 30 - 2,5 Gew.-Teilen, vorzugsweise 25 - 15 Gew.-Teilen, Niederdruckpolyethylen, Polyvinylalkohol, Ethylen-Vinylalkohol-Copolymerisat, Ethylen-Carbonsäure-Copolymerisat, Ethylen-Acrylsäureester-Acrylsäure-Copolymerisat (EAA) oder -terpolymerisat oder Polycaprolacton oder Mischungen bzw. Legierungen von Niederdruckpolyethylen mit ein oder mehreren der vorgenannten Polymerisate, Co- oder Terpolymerisate und bezogen auf 100 Gew.-Teile der Kunststoffmischung bzw. -legierung 50 - 150 Gew.-Teile, vorzugsweise 70 - 120 Gew.-Teile eines feinteiligen mineralischen Füllstoffes oder mineralischen Füllstoffgemisches, vorzugsweise Calciumcarbonat, Mikrotalkum, Kaolin und/oder Kieselsäuregel von dem mehr als 60 Gew.-%, vorzugsweise mehr als 75 Gew.-% (bezogen auf 100 Gew.-%
eingesetzte bzw. enthaltende Füllstoffe) mindestens eine reaktive Substanz besitzen, wobei als reaktive Substanz mindestens eine polare und unpolare Gruppen aufweisende Substanz in Gewichtsmengen von 0,5 bis 10 Gew.-%, vorzugsweise 1 bis 5 Gew.-%, (bezogen auf 100 Gew.-Teile Füllstoff und Füllstoffgemisch) enthalten ist, die vorzugsweise auf der Oberfläche oder auf einem Teil der Oberfläche des Füllstoffes oder Füllstoffgemisches angeordnet ist und eine Oberflächenschicht oder Oberflächenfolie mit einer mittleren Dicke von 3 bis 30 µm, vorzugsweise 5 bis 20 µm, die auf bzw. über der Polyolefinfolie oder Polyolefinfolienbahn angeordnet ist. Die Polyolefinfolie oder Polyolefinfolienbahn weist eine Dicke von 30 bis 700 µm, vorzugsweise 70 bis 500 µm, auf.

Unter Verwendung der Erfindung lassen sich Folien mit einer hohen Oberflächenspannung und/oder einer guten Haftfestigkeit zu der darüber befindlichen Schicht und einer guten Bedruckbarkeit erzielen sowie einer ausreichenden Lagerzeit, innerhalb der die Oberflächenspannung nicht oder nur unwesentlich abnimmt.

Die Folie oder Folienbahn gemäß der Erfindung weist auf ihrer Oberfläche eine Oberflächenspannung von mehr als 68 mN/m (68 dyn/cm), vorzugsweise von mehr als 71 mN/m (71 dyn/cm), auf und/oder ist coronabehandelt oder durch ein Plasmaverfahren vorbehandelt, wobei die vorgenannten Werte der Oberflächenspannung eingestellt werden.

Gemäß einer bevorzugten Ausführungsform sind 0,1 bis 20 Gew.-Teile, vorzugsweise 1 bis 10 Gew.-Teile, des mit einer polaren Substanz versehenen Füllstoffes oder Füllstoffgemisches durch die gleiche Gewichtsmenge eines polaren Füllstoffes oder polaren Füllstoffgemisches, vorzugsweise ungecoatetes Kaolin und/oder Kieselsäuregel, ersetzt. Dadurch können je nach eingesetztem polaren Füllstoff höhere Oberflächenspannungen erzielt werden.

Nach einer vorzugsweisen Ausführungsform ist zwischen der Oberflächenschicht oder Oberflächenfolie und der Polyolefinfolie oder Polyolefinfolienbahn (als Unterfolie) eine Druckschicht angeordnet.

Als polare Substanz bzw. Substanzen ist bzw. sind mindestens eine organisch-chemische Verbindung mit mindestens einer OH-Gruppe und/oder COOH-Gruppe und/oder SiOR oder SiOR-Gruppe oder ähnliche Polysiloxangruppen und mindestens einer oder mehreren unpolaren Gruppen an der Oberfläche des mineralischen Füllstoffes enthalten und/oder dieser ist damit in Form einer dünnen Schicht ganz oder teilweise überzogen, wobei vorzugsweise die polare Gruppen zum Füllstoff orientiert sind.

Bevorzugt werden als polare und unpolare Gruppen aufweisende Verbindungen gesättigte und ungesättigte Carbonsäuren mit einer C-Zahl über 3, vorzugsweise über 10, Hydroxycarbonsäure, Polyoxycarbonsäure mit einer C-Zahl über C₆, vorzugsweise über C₁₀, insbesondere Stearinsäure, Hydroxystearinsäure oder deren Ester und/oder Polysiloxane (z.B. Polydimethylsiloxan) oder Hydroxy- oder Amin-Gruppen aufweisende Polysiloxane oder eine oder mehrere Hydroxygruppen enthaltende Polysiloxane eingeseetzt.

### Beispiele

1. 110 Teile 1,6 Hexanedioldiacrylat
   12 Teile Trimethylolpropantriacrylat
   30 Teile Acrylicacrylat
   48 Teile OH-gruppenhaltiges Polyesteracrylat
   5 Teile Polyisocyanat
   12 Teile Benzildimethylketal als UV-Initiator
   40 Teile Talkum als Mattierungsmittel
   15 Teile Olefin-Wachs als Mattierungsmittel
   10 Teile SiO₂ als Mattierungsmittel
   0,2 Teile Verlaufsmittel oder Verarbeitungshilgsmittel
   3 Teile Azodicarbonamid
2. 128 Teile Diäthylenglykoldiacrylat
   12 Teile Trimethylolpropanetrimethacrylat
   12 Teile Oligoesteracrylat
   48 Teile Urethanacrylat
   10 Teile Polyisocyanat
   12 Teile 2 Hydroxy-2,2-Dimethylacetaophenol als UV-Initiator
   50 Teile Talkum als Mattierungsmittel
   15 Teile Olefinwachs als Mattierungsmittel
   10 Teile SiO₂ als Mattierungsmittel
   0,2 Teile Verlaufsmittel
   3 Teile H₂O als Treibmittel

### Zeichnungsbeschreibung

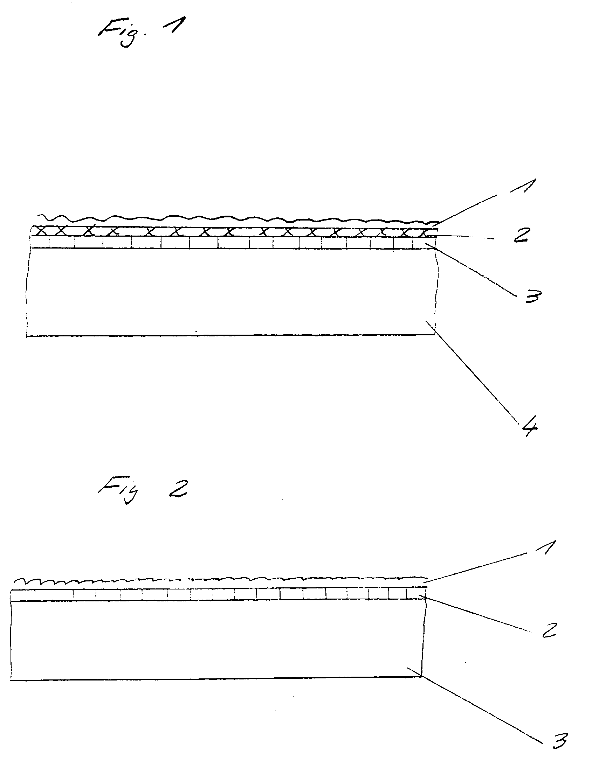

Die Figuren 1 und 2 zeigen schematisch einen Schnitt durch die erfindungsgemäße mehrschichtige Bahn.

In Figur 1 ist die Lackschicht (1) auf der Basis des erfindungsgemäßen Acrylatlackes dargestellt. Die Haftschicht (2) ist zwischen der Lackschicht und der Druckschicht (3) angeordnet und befindet sich auf der Trägerbahn (4), die aus einer Kunststoffolie oder Papier besteht.

In Figur 2 ist die Lackschicht (1) auf der Druckschicht (2) angebracht, die auf der Trägerbahn (3), die aus einer Kunststoffolie oder Papier besteht, angeordnet ist.

## Patentansprüche

1. Aus mindestens zwei Schichten bestehende Folienbahn, zusammengesetzt aus mindestens einer ein- oder mehrschichtigen Kunststoffolienbahn oder Papierbahn, mit einer Gesamtdicke von 50 - 500 µm sowie einer unmittelbar darauf oder über einer darauf befestigten Zwischenschicht oder Kunststoffzwischenschicht angeordneten 3 - 30 µm dicken, unter Mitverwendung mindestens eines monomeren, di- und/oder trimeren Acrylates hergestellten Acrylatschicht, dadurch gekennzeichnet, daß die strahlenhärtbare Lackschicht aus einem Mattlack auf der Basis eines Acrylatgemisches besteht, das durch Umsetzung mindestens eines prepolymeren Acrylates mittleren Molekulargewichtes von 500 bis 2000 mit dem monomeren, di - und/oder trimeren Acrylat, hergestellt ist, und der Lack je 100 Gew.-Teile des Acrylatlackes (berechnet ohne jedes Zusatzmittel, Verarbeitungshilfsmittel oder Treibmittel) 20 - 60 Gew.-Teile eines Mattierungsmittelgemisches, 1 - 10 Gew.-Teile eines UV-Initiators oder UV-Initiatorgemisches, 0 - 10 Gew.-Teile eines Treibmittels oder Treibmittelgemisches enthält oder daraus besteht, wobei in dem Mattlack keine zusätzlichen Verdünnungs- oder Lösungsmittel enthalten sind, das eingesetzte monomere, di- und/oder trimere Acrylat eine Viskosität von 7 - 200 mPas und das verwendete prepolymere Acrylat eine Viskosität von 500 - 15000 mPas aufweisen und das Mattierungsmittelgemisch aus mindestens zwei chemisch verschiedenen Mattierungsmitteln und/oder Mattierungsmitteln mit unterschiedlichen Teilchengrößen besteht.

2. Folienbahn nach Anspruch 1, dadurch gekennzeichnet, daß die Kunststoffolienbahn oder Papierbahn eine Gesamtdicke von 100 - 400 µm aufweist und daß die strahlenhärtbare Lackschicht je 100 Gew.-Teile des Acrylatlackes (berechnet ohne jedes Zusatzmittel, Verarbeitungshilfsmittel oder Verdünnungsmittel) 30 - 50 Gew.-Teile eines Mattierungsmittelgemisches, 2 - 8 Gew.-Teile eines UV-Initiators oder UV-Initiatorgemisches, vorzugsweise eines aminfreien UV-Initiators oder UV-Initiatorgemisches sowie 0,1 - 8 Gew.-Teile eines Treibmittels oder Treibmittelgemisches enthält oder daraus besteht.

3. Folienbahn nach einem oder mehreren der Ansprüche 1 und 2 dadurch gekennzeichnet, daß unter Verwendung von Mattierungsmittel und/oder Treibmittel der Mattgrad auf der Folie zwischen 3 % und 15 % (gemessen nach Gardener) bei einem Winkel von 60 ° eingestellt ist.

4. Folienbahn nach einem oder mehreren der Ansprüche 1 - 3 dadurch gekennzeichnet, daß die strahlenhärtbare Lackschicht durch Umsetzung mindestens eines monomeren, dimeren und/oder trimeren Acrylates mit einer Viskosität von
7 - 200 mPas,
mit mindestens einem prepolymeren Acrylat mit einer Viskosität von
1.000 - 10.000 mPas,
gebildet und nachfolgend mittels energiereicher Bestrahlung ausgehärtet ist.

5. Folienbahn nach einem oder mehreren der Ansprüche 1 - 4 dadurch gekennzeichnet, daß als Mattierungsmittel anorganisch-chemische und/oder organisch-chemische Mattierungsmittel eingesetzt werden.

6. Folienbahn nach einem oder mehreren der Ansprüche 1 - 5 dadurch gekennzeichnet, daß in der Lackschicht als Mattierungsmittel ein unpolares, anorganisch-chemisches Mattierungsmittel oder unpolares, anorganisch-chemisches Mattierungsmittelgemisch enthalten ist.

7. Folienbahn nach einem oder mehreren der Ansprüche 1 - 6 dadurch gekennzeichnet, daß die anorganisch-chemischen Mattierungsmittel eine mittlere Korngröße von
0,5 - 20 µm, vorzugsweise
2 - 12 µm,
aufweisen.

8. Folienbahn nach einem oder mehreren der Ansprüche 1 - 7 dadurch gekennzeichnet, daß die organisch-chemischen Mattierungsmittel eine mittlere Teilchengröße von
0,04 - 10 µm, vorzugsweise
0,2 - 5 µm,
aufweisen.

9. Folienbahn nach einem oder mehreren der Ansprüche 1 - 8 dadurch gekennzeichnet, daß das prepolymere Acrylate enthaltende Acrylatgemisch je 100 Gew.-Teile Acrylatlack (berechnet ohne jedes Zusatzmittel oder Verarbeitungshilfsmittel) zusätzlich
1 - 20 Gew.-Teile, vorzugsweise
2 - 10 Gew.-Teile,
eines Isocyanates und/oder Polyisocyanates enthält.

10. Folienbahn nach einem oder mehreren der Ansprüche 1 - 9 dadurch gekennzeichnet, daß als prepolymere Acrylate Polyesteracrylate, Urethanacrylate, Acrylacrylate, Epoxiacrylate und/oder Mischungen von zwei oder mehreren dieser prepolymeren Acrylate eingesetzt werden, wobei das durchschnittliche Molekulargewicht der prepolymeren Acrylate zwischen
500 bis 2000
liegt.

11. Verfahren zur Herstellung eines mit elektronenstrahlenhärtbarem Lack beschichteten flächenförmigen Trägermaterials mit matter Oberfläche, wobei das Trägermaterial aus mindestens einer ein- oder mehrschichtigen Kunststoffolienbahn oder Papierbahn mit einer Gesamtdicke von
50 - 500 µm
besteht und unmittelbar darauf oder über eine darauf befestigte Zwischenschicht oder Kunststoffzwischenschicht eine strahlenhärtbare Lackschicht aufgebracht wird, die mindestens ein monomeres, di- und/oder trimeres Acrylat sowie ggf. übliche Zusatzstoffe, vorzugsweise Siliziumdioxid, und/oder Füllstoffe enthält, dadurch gekennzeichnet, daß die strahlenhärtbare Lackschicht aus einem Mattlack auf der Basis eines Acrylatgemisches besteht, das durch Umsetzung mindestens eines prepolymeren Acrylates mittleren Molekulargewichtes von 500 bis 2000 mit dem monomeren, di- und/oder trimeren Acrylat, hergestellt wird, und der Lack je 100 Gew.-Teile des Acrylatlackes (berechnet ohne jedes Zusatzmittel, Verarbeitungshilfsmittel oder Treibmittel) 20 - 60 Gew.-Teile eines Mattierungsmittelgemisches, 1 - 10 Gew.-Teile eines UV-Initiators oder UV-Initiatorgemisches, 0 - 10 Gew.-Teile eines Treibmittels oder Treibmittelgemisches enthält oder daraus besteht, wobei in dem Mattlack keine zusätzlichen Verdünnungs- oder Lösungsmittel verwendet werden, das eingesetzte monomere, di- und/oder trimere Acrylat eine Viskosität von 7 - 200 mPas und das verwendete prepolymere Acrylat eine Viskosität von
500 - 15000 mPas aufweisen und als Mattierungsmittelgemisch aus mindestens zwei chemisch verschiedenen Mattierungsmitteln und/oder Mattierungsmitteln mit unterschiedlichen Teilchengrößen eingesetzt werden und daß die aufgebrachte Lackschicht durch langwellige Strahlen, vorzugsweise Infrarotstrahlen, auf eine Temperatur zwischen
75 und 150 °C
erwärmt und unmittelbar anschließend durch Elektronenstrahlen oder UV-Strahlen ausgehärtet wird.

12. Verfahren nach Anspruch 11 dadurch gekennzeichnet, daß ein strahlenhärtbarer Lack aufgebracht wird, der je 100 Gew.-% des Acrylatlackes (berechnet ohne jedes Zusatzmittel oder Verarbeitungshilfsmittel) 30 - 90 Gew.-Teile eines Mattierungsmittelgemisches, 2 - 8 Gew.-Teile eines UV-Initiators oder UV-Initiatorgemisches, vorzugsweise eines aminfreien UV-Initiators oder UV-Initiatorgemisches, sowie 0,1 - 8 Gew.-Teile eines Treibmittels oder Treibmittelgemisches enthält oder daraus besteht, daß der strahlenhärtbare Lack neben mindestens einem monomeren, di- und/oder trimeren Acrylat zusätzlich mindestens ein prepolymeres Acrylat enthält, wobei die Viskosität (gemessen in mPas) des prepolymeren Acrylates oder prepolymeren Acrylatgemisches um mehr als das Doppelte, vorzugsweise um mehr als das Fünffache höher eingestellt wird, als die Viskosität des monomeren, di- und/oder trimeren Acrylates oder Acrylatgemisches, daß danach die aufgebrachte Lackschicht durch langwellige Strahlen, vorzugsweise Infrarotstrahlen, auf eine Temperatur zwischen
80 bis 130 °C
erwärmt und unmittelbar anschließend durch Elektronenstrahlen oder UV -Strahlen ausgehärtet wird.

13. Verfahren nach Ansprüchen 11 und 12, dadurch gekennzeichnet, daß das Acrylatharzgemisch im Walzendirektauftrag oder mittels Übertragungswalzen oder im Rakelverfahren auf die Trägerbahn aufgetragen, erwärmt oder erhitzt und, vorzugsweise nach dem Aufschäumen des Treibmittels oder Treibmittelgemisches, unter Verwendung von ultraviolettem Licht oder mit Elektronenstrahlen mit einer Strahlenintensität von
1 - 10 Mrad, vorzugsweise
2 - 7 Mrad,
ausgehärtet wird.

14. Verfahren nach einem oder mehreren der Ansprüche 11 - 13, dadurch gekennzeichnet, daß der Mattierungsgrad des Mattlackes unter Verwendung von mindestens einem Mattierungsmittel und/oder Treibmittel zwischen 3 % bis 15 % (gemessen nach Gardener) bei einem Winkel von 60 ° eingestellt wird.

15. Verfahren nach einem oder mehreren der Ansprüche 11 - 14, dadurch gekennzeichnet, daß mindestens ein monomeres, di- und/oder trimeres Acrylat oder Acrylatgemisch mit einer Viskosität von
7 - 200 mPas,
mit einem prepolymeren Acrylat mit einer Viskosität von
500 - 15000 mPas, vorzugsweise
1000 - 10000 mPas,
in Gegenwart oder in Abwesenheit der anderen Bestandteile des Acrylatlackes umgesetzt, erwärmt und nachfolgend durch energiereiche Strahlen gehärtet wird.

16. Verfahren nach einem oder mehreren der Ansprüche 11-15, dadurch gekennzeichnet, daß das Gewichtsverhältnis des monomeren, di- und/oder trimeren Acrylates oder Acrylatgemisches zu dem prepolymeren Acrylat oder prepolymeren Acrylatgemisch
5 : 1 bis 1 : 1, vorzugsweise
4 : 1 bis 1,3 : 1,
beträgt.

17. Verfahren nach einem oder mehreren der Ansprüche 11 - 16 , dadurch gekennzeichnet, daß der Acrylatlack
80 - 50 Gew.-Teile, vorzugsweise
79 - 55 Gew.-Teile,
des monomeren, di- und/oder trimeren Acrylates oder Acrylatgemisches und
20 - 50 Gew.-Teile, vorzugsweise
21 - 45 Gew.-Teile,
des prepolymeren Acrylates oder prepolymeren Acrylatgemisches sowie zusätzlich die übrigen Bestandteile enthält.

## Claims

1. A film web consisting of at least two layers and composed of at least one single- or multi-layer plastics film web or paper web, with an overall thickness of from 50 - 500 µm, as well as a 3 - 30 µm thick acrylate layer produced with the co-use of at least one monomeric, dimeric and/or trimeric acrylate and arranged directly on said web or over an intermediate layer or intermediate plastics layer fixed thereto, characterized in that the radiation-hardenable lacquer coat consists of an acrylate mixture-based matt lacquer, which is produced by the reaction of at least one prepolymeric acrylate of average molecular weight of from 500 to 2000 with the monomeric, dimeric and/or trimeric acrylate, and in that the lacquer contains or consists of 20 - 60 parts by weight of a dulling agent mixture, 1 - 10 parts by weight of a UV initiator or UV initiator mixture, 0 - 10 parts by weight of a propellant or propellant mixture per 100 parts by weight of the acrylate lacquer (calculated without any additives, processing agents or propellants), no additional thinning or diluting agents being contained in the matt lacquer, in that the monomeric, dimeric and/or trimeric acrylate used has a viscosity of from 7 - 200 mPas and the prepolymeric acrylate used has a viscosity of from 500 - 15000 mPas aand in that the dulling agent mixture consists of at least two chemically different dulling agents and/or dulling agents with differing particle sizes.

2. A film web according to claim 1, characterized in that the plastics film web or paper web has an overall thickness of from 100 - 400 µm and in that the radiation-hardenable lacquer layer contains or consists of 30 - 50 parts by weight of a dulling agent mixture, 2 - 8 parts by weight of a UV initiator or UV initiator mixture, preferably an amine-free UV initiator or UV initiator mixture as well as 0.1 - 8 parts by weight of a propellant or propellant mixture per 100 parts by weight of the acrylate lacquer (calculated without any additives, processing agents or thinning agents).

3. A film web according to either or both of claims 1 and 2, characterized in that, using dulling agents and/or propellants, the degree of dullness on the film is set at between 3 % and 15 % (measured according to Gardener) at an angle of 60°.

4. A film web according to any one of claims 1 - 3, characterized in that the radiation-hardenable lacquer layer is formed by the reaction of least one monomeric, dimeric and/or trimeric acrylate with a viscosity of
7 - 200 mPas,
with at least one prepolymeric acrylate with a viscosity of
1,000 - 10,000 mPas
and subsequently hardened by means of high-energy radiation.

5. A film web according to any one of claims 1 - 4, characterized in that inorganic chemical and/or organic chemical dulling agents are used as the dulling agent.

6. A film web according to any one of claims 1 - 5, characterized in that a non-polar inorganic chemical dulling agent or a non-polar inorganic chemical dulling agent mixture is contained in the lacquer layer as the dulling agent.

7. A film web according to any one of claims 1 - 6, characterized in that the inorganic chemical dulling agents exhibit an average grain size of
0.5 - 20 µm, preferably
2 - 12 µm.

8. A film web according to any one of claims 1 - 7, characterized in that the organic chemical dulling agents exhibit an average particle size of
0.04 - 10 µm, preferably
0.2 - 5 µm.

9. A film web according to any one of claims 1 - 8, characterized in that, per 100 parts by weight acrylate lacquer (calculated without any additives or processing agents), the acrylate mixture containing prepolymeric acrylates additionally contains
1 - 20 parts by weight, preferably
2 - 10 parts by weight
of an isocyanate and/or polyisocyanate.

10. A film web according to any one of claims 1 - 9, characterized in that polyester acrylates, urethane acrylates, acryl acrylates, epoxy acrylates and/or mixtures of two or more of these prepolymeric acrylates are used as the prepolymeric acrylates, the average molecular weight of the prepolymeric acrylates lying between
500 and 2000.

11. A process for producing a planar supporting material with matt surface and coated with electron beam-hardenable laccquer, the supporting material consisting of at least one single- or multi-layer plastics film web or paper web with an overall thickness of from
50 - 500 µm
and a radiation-hardenable lacquer layer being applied directly thereto or over an intermediate layer or intermediate plastics layer fixed thereto, which lacquer layer contains at least one monomeric, dimeric and/or trimeric acrylate as well optionally as the usual additives, preferably silicon dioxide, and/or fillers, characterized in that the radiation-hardenable lacquer layer consists of an acrylate mixture-based matt lacquer, which is produced by the reaction of at least one prepolymeric acrylate of average molecular weight of from 500 to 2000 with the monomeric, dimeric and/or trimeric acrylate, and in that the lacquer contains or consists of 20 - 60 parts by weight of a dulling agent mixture, 1 - 10 parts by weight of a UV initiator or UV initiator mixture, 0 - 10 parts by weight of a propellant or propellant mixture per 100 parts by weight of the acrylate lacquer (calculated without any additives, processing agents or propellants), no additional thinning or diluting agents being used in the matt lacquer, in that the monomeric, dimeric and/or trimeric acrylate used has a viscosity of from 7 - 200 mPas and the prepolymeric acrylate used has a viscosity of from 500 - 15000 mPas and at least two chemically different dulling agents and/or dulling agents with differing particle sizes are used as the dulling agent mixture and in that the lacquer layer applied is heated by long-wave radiation, preferably infrared radiation, to a temperature between
75 and 150 °C
and hardened immediately thereafter by electron beams or UV radiation.

12. A process according to claim 11, characterized in that a radiation-hardenable lacquer is applied which contains or consists of 30 - 90 parts by weight of a dulling agent mixture, 2 - 8 parts by weight of a UV initiator or UV initiator mixture, preferably an amine-free UV initiator or UV initiator mixture as well as 0.1 - 8 parts by weight of a propellant or propellant mixture per 100 parts by weight of the acrylate lacquer (calculated without any additives or processing agents), in that, in addition to at least one monomeric, dimeric and/or trimeric acrylate, the radiation-hardenable lacquer additionally contains at least one prepolymeric acrylate, the viscosity (measured in mPas) of the prepolymeric acrylate or prepolymeric acrylate mixture being set at more than twice, preferably more than five times as high as the viscosity of the monomeric, dimeric and/or trimeric acrylate or acrylate mixture, in that thereafter the lacquer layer applied is heated by long-wave radiation, preferably infrared radiation, to a temperature between
80 and 130 °C
and hardened immediately thereafter by electron beams or UV radiation.

13. A process according to claim 11 and claim 12, characterized in that the acrylate resin mixture is applied to the supporting web by direct kiss-roll coating or by means of transfer rolls or by the doctor process, warmed or heated and hardened, preferably after foaming of the propellant or propellant mixture, by using ultraviolet light or with electron beams with a beam intensity of
1 - 10 Mrad, preferably
2 - 7 Mrad.

14. A process according to any one of claims 11 - 13, characterized in that the dulling degree of the matt lacquer is set using at least one dulling agent and/or propellant, between 3 % and 15 % (measured according to Gardener) at an angle of 60°.

15. A process according to any one of claims 11 - 14, characterized in that at least one monomeric, dimeric and/or trimeric acrylate or acrylate mixture with a viscosity of from
7 - 200 mPas
is reacted with a prepolymeric acrylate with a viscosity of from
500 - 15000 mPas, preferably
1000 - 10000 mPas
in the presence or absence of the other constituents of the acrylate lacquer, heated and subsequently hardened by high-energy radiation.

16. A process according to any one of claims 11 - 15, characterized in that the weight ratio of the monomeric, dimeric and/or trimeric acrylate or acrylate mixture to the prepolymeric acrylate or prepolymeric acrylate mixture amounts to
5 : 1 to 1 : 1, preferably
4 : 1 to 1.3 : 1.

17. A process according to any one of claims 11 - 16, characterized in that the acrylate lacquer contains
80 - 50 parts by weight, preferably
79 - 55 parts by weight
of the monomeric, dimeric and/or trimeric acrylate or acrylate mixture and
20 - 50 parts by weight, preferably
21 - 45 parts by weight
of the prepolymeric acrylate or prepolymeric acrylate mixture as well, additionally, as the other constituents.

## Revendications

1. Bande de feuille, constituée d'au moins deux couches, composée d'au moins une bande de feuille mono- ou multicouche, en matière plastique ou en papier, d'une épaisseur totale de 50 à 500 µm, de même que d'une couche acrylique d'une épaisseur de 3 à 30 µm, fabriquée en combinaison avec au moins un acrylate monomère, di- et/ou trimère, cette couche acrylique étant appliquée directement ou au-dessus d'une couche intermédiaire superposée ou d'une couche intermédiaire en matière plastique superposée; bande de feuille caractérisée en ce que la couche de vernis durcissable par irradiation est composée d'un vernis mat à base d'un mélange acrylique, lequel est fabriqué par transformation d'au moins un acrylate prépolymère de masse moléculaire moyenne située entre 500 et 2.000 avec l'acrylate monomère, di- et/ou trimère et en ce que le vernis contient, ou est composé de, 100 parts en poids du vernis acrylique (calculé sans aucun additif, ni adjuvant de transformation, ni agent moussant), 20 à 60 parts en poids d'un mélange d'agents délustrants, 1 à 10 parts en poids d'un initiateur UV ou d'un mélange d'initiateurs UV, 0 à 10 parts en poids d'un agent moussant ou d'un mélange d'agents moussants, où le vernis mat ne contient ni diluant ni solvant supplémentaire, où l'acrylate monomère, di- et/ou trimère utilisé présente une viscosité de 7 à 200 mPas et l'acrylate prépolymère utilisé présente une viscosité de 500 à 15.000 mPas et où le mélange d'agents délustrants est constitué d'au moins deux agents délustrants chimiquement différents et/ou d'agents délustrants de granulométrie différente.

2. Bande de feuille selon la revendication 1, caractérisée en ce que la bande de feuille en matière plastique ou en papier présente une épaisseur totale de 100 à 400 µm et en ce que la couche de vernis durcissable par irradiation contient, ou est composée de, 100 parts en poids de vernis acrylique (calculé sans aucun additif, ni adjuvant de transformation, ni diluant), 30 à 50 parts en poids d'un mélange d'agents délustrants, 2 à 8 parts en poids d'un initiateur UV ou d'un mélange d'initiateurs UV, de préférence d'un initiateur UV ou d'un mélange d'initiateurs UV exempts d'amines, de même que 0,1 à 8 parts en poids d'un agent moussant ou d'un mélange d'agents moussants.

3. Bande de feuille selon une ou plusieurs des revendications 1 et 2, caractérisée en ce que le degré de matité sur la feuille est ajusté, à l'aide d'un agent délustrant et/ou d'un agent moussant, entre 3 % et 15 % (mesuré d'après GARDENER) à un angle de 60 °.

4. Bande de feuille selon une ou plusieurs des revendications 1 à 3, caractérisée en ce que la couche de vernis durcissable par irradiation est formée par transformation d'au moins un acrylate monomère, dimère et/ou trimère d'une viscosité de
7 à 200 mPas,
avec au moins un acrylate prépolymère d'une viscosité de
1.000 à 10.000 mPas,
avant d'être durcie par irradiation hautement énergétique.

5. Bande de feuille selon une ou plusieurs des revendications 1 à 4, caractérisée en ce que des agents délustrants inorganiques et/ou organiques sont utilisés comme agents délustrants.

6. Bande de feuille selon une ou plusieurs des revendications 1 à 5, caractérisée en ce qu'un agent délustrant inorganique et non-polaire ou un mélange d'agents délustrants inorganiques et non-polaires est contenu dans la couche de vernis comme agent délustrant.

7. Bande de feuille selon une ou plusieurs des revendications 1 à 6, caractérisée en ce que l'agent délustrant inorganique présente une granulométrie moyenne de
0,5 à 20 µm et de préférence
2 à 12 µm.

8. Bande de feuille selon une ou plusieurs des revendications 1 à 7, caractérisée en ce que l'agent délustrant organique présente une granulométrie moyenne de
0,04 à 10 µm et de préférence
0,2 à 5 µm.

9. Bande de feuille selon une ou plusieurs des revendications 1 à 8, caractérisée en ce que le mélange acrylique contenant l'acrylate prépolymère contient, outre 100 parts en poids de vernis acrylique (calculé sans aucun additif, ni auxiliaire de transformation),
1 à 20 parts en poids, de préférence
2 à 10 parts en poids,
d'un isocyanate et/ou d'un polyisocyanate.

10. Bande de feuille selon une ou plusieurs des revendications 1 à 9, caractérisée en ce que des acrylates de polyester, des acrylates d'uréthane, des acrylates d'acryle, des acrylates d'époxyde et/ou des mélanges de deux ou plusieurs de ces acrylates prépolymères sont utilisés comme acrylates prépolymères, la masse moléculaire moyenne des acrylates prépolymères se situant entre 500 et 2.000.

11. Procédé pour la fabrication d'un matériau de support plan à surface mate, recouvert par un vernis durcissable par irradiation électronique, où le matériau de support est constitué d'au moins une bande de feuille, mono- ou multicouche, en matière plastique ou en papier, d'une épaisseur totale de
50 à 500 µm
et sur laquelle est appliquée une couche de vernis durcissable par irradiation, directement ou sur une couche intermédiaire superposée ou une couche intermédiaire superposée en matière plastique; ce vernis durcissable par irradiation contenant au moins un acrylate monomère, di- et/ou trimère, de même que, le cas échéant, des additifs courants, de préférence du dioxyde de silicium et/ou des matériaux de charge; procédé caractérisé en ce que la couche de vernis durcissable par irradiation est composée d'un vernis mat à base d'un mélange acrylique, lequel est fabriqué par transformation d'au moins un acrylate prépolymère de masse moléculaire moyenne de 500 à 2.000 avec un acrylate monomère, di- et/ou trimère et en ce que le vernis contient, ou est composé de, 100 parts en poids du vernis acrylique (calculé sans aucun additif, ni auxiliaire de transformation, ni agent moussant), 20 à 60 parts en poids d'un mélange d'agents délustrants, 1 à 10 parts en poids d'un initiateur UV ou d'un mélange d'initiateurs UV, 0 à 10 parts en poids d'un agent moussant ou d'un mélange d'agents moussants, où le vernis mat ne contient ni diluant, ni solvant supplémentaire, où l'acrylate monomère, di- et/ou trimère utilisé présente une viscosité de 7 à 200 mPas et l'acrylate prépolymère utilisé présente une viscosité de 500 à 15.000 mPas et où on utilise comme mélange d'agents délustrants au moins deux agents délustrants chimiquement différents et/ou des agents délustrants de granulométrie différente et en ce que la couche de vernis appliquée est chauffée par des rayons de grandes longueurs d'onde, de préférence des rayons infrarouges, à une température comprise entre
75 et 150 °C,
immédiatement avant d'être durcie par des rayons d'électrons ou des rayons UV.

12. Procédé selon la revendication 11, caractérisé en ce qu'on applique un vernis durcissable par irradiation, qui contient, ou qui est composé de, 100 parts en poids du vernis acrylique (calculé sans aucun additif, ni auxiliaire de transformation), 30 à 90 parts en poids d'un mélange d'agents délustrants, 2 à 8 parts en poids d'un initiateur UV ou d'un mélange d'initiateurs UV, de préférence d'un initiateur UV ou d'un mélange d'initiateurs UV exempts d'amines, de même que 0,1 à 8 parts en poids d'un agent moussant ou d'un mélange d'agents moussants, en ce que le vernis durcissable par irradiation contient, outre au moins un acrylate monomère, di- et/ou trimère, au moins un acrylate prépolymère supplémentaire, où la viscosité (mesurée en mPas) de l'acrylate prépolymère ou du mélange d'acrylates prépolymères est augmentée à plus du double, de préférence à plus du quintuple de la viscosité de l'acrylate ou du mélange d'acrylates monomères, di- et/ou trimères, en ce que la couche de vernis appliquée est ensuite chauffée par des rayons de grandes longueurs d'onde, de préférence des rayons infrarouges, à une température comprise entre
80 et 130 °C,
immédiatement avant d'être durcie par des rayons d'électrons ou des rayons UV.

13. Procédé selon les revendications 11 et 12, caractérisé en ce que le mélange de résines acryliques est appliqué par transfert direct par rouleaux ou moyennant des rouleaux de transfert ou par un procédé de raclage sur la bande de support, avant d'être échauffé ou chauffé, puis durci, de préférence après expansion de l'agent moussant ou du mélange d'agents moussants, à l'aide de lumière ultraviolette ou grâce à des rayons d'électrons d'une intensité de
1 à 10 Mrad et de préférence
2 à 7 Mrad.

14. Procédé selon une ou plusieurs des revendications 11 à 13, caractérisé en ce que le degré de matité du vernis mat est ajusté, à l'aide d'au moins un agent délustrant et/ou agent moussant, entre 3 % et 15 % (mesuré d'après GARDENER) à un angle de 60 °.

15. Procédé selon une ou plusieurs des revendications 11 à 14, caractérisé en ce que au moins un acrylate ou un mélange d'acrylates monomères, di- et/ou trimères d'une viscosité de
7 à 200 mPas
est transformé avec un acrylate prépolymère d'une viscosité de
500 à 15.000 mPas, de préférence
1.000 à 10.000 mPas,
en présence ou en l'absence des autres composants du vernis acrylique, avant d'être chauffé, puis durci par rayons énergétiques.

16. Procédé selon une ou plusieurs des revendications 11 à 15, caractérisé en ce que le rapport massique de l'acrylate ou du mélange d'acrylates monomères, di- et/ou trimères à l'acrylate prépolymère ou au mélange d'acrylates prépolymères est de
5 : 1 à 1 : 1 et de préférence
4 : 1 à 1,3 : 1.

17. Procédé selon une ou plusieurs des revendications 11 à 16, caractérisé en ce que le vernis acrylique contient
80 à 50 parts en poids, de préférence
79 à 55 parts en poids,
de l'acrylate ou du mélange d'acrylates monomères, di- et/ou trimères et
20 à 50 parts en poids, de préférence
21 à 45 parts en poids,
de l'acrylate prépolymère ou du mélange d'acrylates prépolymères, ainsi que, en outre, les autres composants.
